# EUROPEAN PATENT APPLICATION

(11) **EP 4 746 398 A1**
(43) Date of publication of application: **20.05.2026**
(21) Application number: 24838464.6
(22) Date of filing: 22.05.2024
(51) Int. Cl.: H04N 5/14, H04N 23/695, H04N 23/73

(54) **IMAGE ACQUISITION METHOD AND APPARATUS, STORAGE MEDIUM, AND ELECTRONIC DEVICE**

(30) Priority: 10.07.2023 CN 202310842570
(71) Applicant: Shenzhen TCL Creative Cloud Technology CO., Ltd., Shenzhen, Guangdong 518000 (CN)
(72) Inventor: LAI, Yuzhou, Shenzhen, Guangdong 518000 (CN); ZHANG, Hong, Shenzhen, Guangdong 518000 (CN)
(74) Representative: Murgitroyd & Company
(86) International application number: PCT/CN2024/094740
(87) International publication number: WO 2025/011206

(57) **Abstract**

The present disclosure relates to the technical field of image acquisition, and discloses an image acquisition method and apparatus, a storage medium, and an electronic device. The method comprises: performing motion detection area tracking on a target object in a captured picture; performing motion detection in a motion detection area; and performing exposure adjustment on the basis of the motion detection result to obtain an adjusted exposure time used for acquiring an image comprising the target object. The present disclosure can reduce the power consumption of image acquisition and ensure that the target object is clear.

## Description

This application claims priority to Chinese Application No. 2023108425704 on July 10, 2023, entitled "IMAGE ACQUISITION METHOD AND APPARATUS, STORAGE MEDIUM, AND ELECTRONIC DEVICE", the contents of which are incorporated herein by reference in their entirety.

### FIELD OF THE INVENTION

The present disclosure relates to the technical field of image acquisition, and in particular to an image acquisition method, an image acquisition apparatus, a storage medium, and an electronic device.

### BACKGROUND

At present, in photographing devices such as digital cameras and mobile phone cameras, motion detection technology is widely applied to image acquisition. By performing motion detection on a shooting image of a photographing device, when a motion condition is detected, an exposure time is adjusted, so as to avoid motion blur in a captured image.

However, existing motion detection technologies are often implemented by performing global detection processing on the shooting image. Although motion blur in a captured image may be avoided by adjusting the exposure time, such a global detection processing manner has, on one hand, relatively high power consumption, and on the other hand, is susceptible to interference from objects other than a target object or from a background, thereby easily causing the target object to be unclear.

### Technical Problem

Existing motion detection technologies are often implemented by performing global detection processing on a shooting image, and may avoid motion blur in a captured image by adjusting an exposure time. However, such a global detection processing manner has, on one hand, relatively high power consumption, and on the other hand, is susceptible to interference from objects other than a target object or from a background, thereby easily causing the target object to be unclear.

### SUMMARY

The embodiments of the present disclosure provide an image acquisition solution, which can effectively reduce power consumption during image acquisition and ensure clarity of a target object.

The embodiments of the present disclosure provide the following technical solutions.

According to one embodiment of the present disclosure, an image acquisition method comprising:
determining a target object in a shooting image according to a predetermined operation;
performing motion detection region tracking on the target object in the shooting image to obtain a motion detection region containing the target object;
performing motion detection within the motion detection region to obtain a motion detection result;
performing exposure adjustment according to the motion detection result to obtain an adjusted exposure time, wherein the adjusted exposure time is used to acquire an image containing the target object.

In some embodiments of the present disclosure, the performing motion detection region tracking on the target object in the shooting image to obtain the motion detection region containing the target object comprises:
performing automatic focus tracking on the target object in the shooting image to obtain an object focus-tracking region containing the target object; and
obtaining the motion detection region containing the target object according to the object focus-tracking region.

In some embodiments of the present disclosure, the performing motion detection region tracking on the target object in the shooting image to obtain the motion detection region containing the target object comprises:
detecting a shooting scene;
acquiring a preset shooting habit label of a current shooting user under the shooting scene;
using a preset motion region detection model, and performing detection processing based on the preset shooting habit label and a frame image corresponding to the shooting image, to obtain the motion detection region containing the target object.

In some embodiments of the present disclosure, the preset shooting habit label is generated in the following manner:
collecting a plurality of sets of shooting behavior-related parameters of the current shooting user under the shooting scene;
performing analysis processing based on the plurality of sets of shooting behavior-related parameters to obtain the preset shooting habit label of the current shooting user under the shooting scene.

In some embodiments of the present disclosure, the motion detection region comprises a plurality of sub-detection regions, and different sub-detection regions correspond to different portions of the target object;
the performing motion detection within the motion detection region to obtain the motion detection result comprises:
determining a region to be detected from the plurality of sub-detection regions according to areas of the sub-detection regions;
performing motion detection within the region to be detected to obtain the motion detection result.

In some embodiments of the present disclosure, the determining the region to be detected from the plurality of sub-detection regions according to the areas of the sub-detection regions comprises:
screening, from the plurality of sub-detection regions, sub-detection regions that satisfy a predetermined detection condition, wherein the predetermined detection condition is that a sum of areas of the screened sub-detection regions is smaller than a predetermined threshold and weights of the screened sub-detection regions are higher than weights of unscreened sub-detection regions;
obtaining the region to be detected according to the sub-detection regions satisfying the predetermined detection condition.

In some embodiments of the present disclosure, the preset motion region detection model is trained in the following manner:
acquiring a sample set, wherein the sample set comprises a plurality of training samples, and each training sample comprises a sample shooting habit label and a plurality of frames of sample images, wherein each frame of the sample images is marked with a sample detection region containing a sample object;
inputting the sample shooting habit labels and the plurality of frames of sample images comprised in the training samples into an initial motion region detection model for detection processing to obtain predicted detection regions detected in the plurality of frames of sample images of the training samples;
performing parameter adjustment on the initial motion region detection model based on the predicted detection regions and the sample detection regions until a predetermined training termination condition is satisfied, to obtain the preset motion region detection model.

According to one embodiment of the present disclosure, an image acquisition apparatus is provided. The apparatus comprises:
an initialization module, configured to determine a target object in a shooting image according to a predetermined operation;
a tracking module, configured to perform motion detection region tracking on the target object in the shooting image to obtain a motion detection region containing the target object;
a detection module, configured to perform motion detection within the motion detection region to obtain a motion detection result;
an acquisition module, configured to perform exposure adjustment according to the motion detection result to obtain an adjusted exposure time, where the adjusted exposure time is used to acquire an image containing the target object.

In some embodiments of the present disclosure, the tracking module comprises a first tracking unit, configured to:
perform automatic focus tracking on the target object in the shooting image to obtain an object focus-tracking region containing the target object;
obtain the motion detection region containing the target object according to the object focus-tracking region.

In some embodiments of the present disclosure, the tracking module comprises a second tracking unit, configured to: detect a shooting scene; acquire a preset shooting habit label of a current shooting user under the shooting scene; use a preset motion region detection model, and perform detection processing based on the preset shooting habit label and a frame image corresponding to the shooting image, to obtain the motion detection region containing the target object.

In some embodiments of the present disclosure, the apparatus further comprises a label generation apparatus, configured to: collect a plurality of sets of shooting behavior-related parameters of the current shooting user under the shooting scene; and
perform analysis processing based on the plurality of sets of shooting behavior-related parameters to obtain the preset shooting habit label of the current shooting user under the shooting scene.

In some embodiments of the present disclosure, the motion detection region comprises a plurality of sub-detection regions, and different sub-detection regions correspond to different portions of the target object; the detection module is configured to: determine a region to be detected from the plurality of sub-detection regions according to areas of the sub-detection regions; and perform motion detection within the region to be detected to obtain the motion detection result.

In some embodiments of the present disclosure, the detection module is configured to screen, from the plurality of sub-detection regions, sub-detection regions that satisfy a predetermined detection condition, wherein the predetermined detection condition is that a sum of areas of the screened sub-detection regions is smaller than a predetermined threshold and weights of the screened sub-detection regions are higher than weights of unscreened sub-detection regions; and obtain the region to be detected according to the sub-detection regions satisfying the predetermined detection condition.

In some embodiments of the present disclosure, the apparatus further comprises a training module, configured to: acquire a sample set, where the sample set comprises a plurality of training samples, and each training sample comprises a sample shooting habit label and a plurality of frames of sample images, wherein each frame of the sample images is marked with a sample detection region containing a sample object; input the sample shooting habit labels and the plurality of frames of sample images comprised in the training samples into an initial motion region detection model for detection processing to obtain predicted detection regions detected in the plurality of frames of sample images of the training samples; and perform parameter adjustment on the initial motion region detection model based on the predicted detection regions and the sample detection regions until a predetermined training termination condition is satisfied, to obtain the preset motion region detection model.

According to another embodiment of the present disclosure, a storage medium storing computer program executable by a processor of a computer to perform the method provided in the embodiments of the present disclosure.

According to another embodiment of the present disclosure, an electronic device includes a processor and a memory storing computer program executable by the processor of a computer to perform the method provided in the embodiments of the present disclosure.

According to another embodiment of the present disclosure, a computer program product or computer program is provided. The computer program product or the computer program comprises computer instructions stored in a computer-readable storage medium. A processor of a computer device reads the computer instructions from the computer-readable storage medium and executes the computer instructions, such that the computer device performs the method provided in the various optional implementations of the embodiments of the present disclosure.

### Advantageous effects

In the embodiments of the present disclosure, a target object in a shooting image is determined according to a predetermined operation; motion detection region tracking is performed on the target object in the shooting image to obtain a motion detection region containing the target object; motion detection is performed within the motion detection region to obtain a motion detection result; and exposure adjustment is performed according to the motion detection result to obtain an adjusted exposure time, where the adjusted exposure time is used to acquire an image containing the target object.

In this manner, the target object is first determined in the shooting image, and motion detection region tracking is performed on the target object to obtain a motion detection region containing the target object. Then, local motion detection is performed within the motion detection region, and exposure adjustment is further carried out. On one hand, power consumption is reduced; on the other hand, interference from objects other than the target object or from a background is avoided, thereby ensuring clarity of the target object. As a result, image acquisition power consumption can be effectively reduced while ensuring that the target object remains clear.

### BRIEF DESCRIPTION OF THE DRAWINGS

In order to more clearly illustrate the technical solutions in the embodiments of the present disclosure, the drawings to be used in the description of the embodiments are briefly introduced below. It is obvious that the drawings in the following description merely show some embodiments of the present disclosure. For those skilled in the art, other drawings can also be obtained based on these drawings without any inventive effort.
FIG. 1 illustrates a flowchart of an image acquisition method according to one embodiment of the present disclosure.
FIG. 2 illustrates a block diagram of an image acquisition apparatus according to one embodiment of the present disclosure.
FIG. 3 illustrates a block diagram of an electronic device according to another embodiment of the present disclosure.

### DETAILED DESCRIPTION OF THE PRESENT DISCLOSURE

The present disclosure is further described in detail below with reference to the accompanying drawings and embodiments. It should be understood that the embodiments provided herein are merely used to explain the present disclosure, and are not intended to limit the present disclosure. In addition, the embodiments provided below are some embodiments for implementing the present disclosure, rather than all embodiments for implementing the present disclosure. Under the premise that no conflict exists, the technical solutions recorded in the embodiments of the present disclosure may be implemented in any combination.

It should be noted that, in the embodiments of the present disclosure, the terms "comprise", "include", or any other variants thereof are intended to cover non-exclusive inclusion, such that a method or an apparatus including a series of elements includes not only the elements explicitly listed, but also other elements not expressly listed, or elements inherent to the implementation of the method or the apparatus. Without further limitation, an element defined by the wording "comprising one ..." does not exclude the presence of additional related elements in the method or apparatus including such element (for example, steps in the method or units in the apparatus, wherein the units may be partial circuits, partial processors, partial programs, or software, and the like).

For example, the image acquisition method provided in the embodiments of the present disclosure includes a series of steps, but is not limited to the steps explicitly described. Similarly, the image acquisition apparatus provided in the embodiments of the present disclosure includes a series of units, but is not limited to the units explicitly described, and may further include units required for acquiring related information or performing processing based on the information.

Unless otherwise defined, all technical and scientific terms used herein have the same meanings as commonly understood by those skilled in the technical field to which the present disclosure belongs. The terms used herein are only for the purpose of describing specific embodiments, and are not intended to limit the present disclosure.

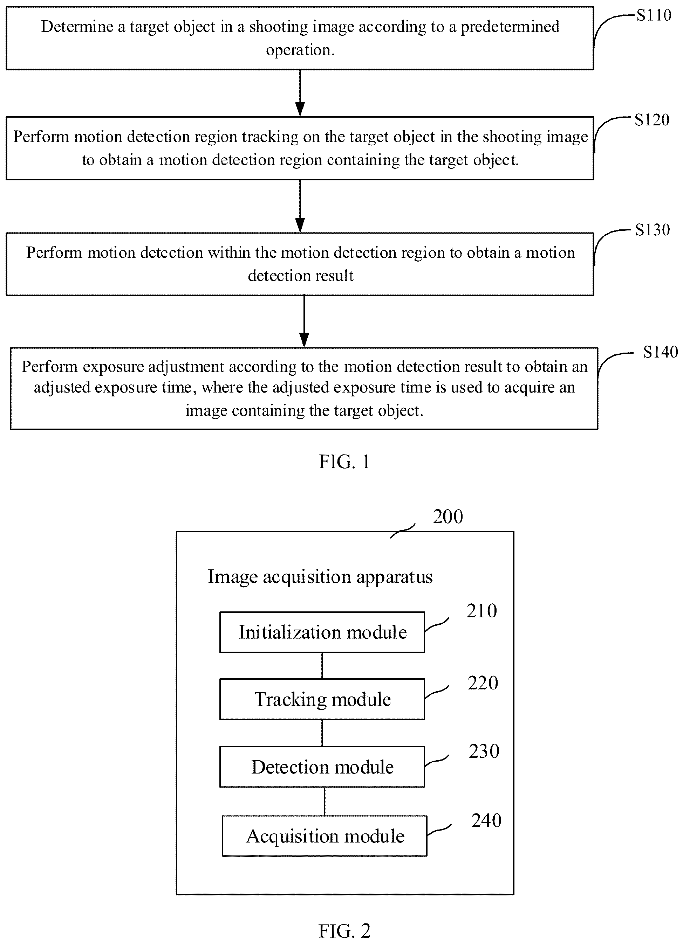

FIG. 1 illustrates a flowchart of an image acquisition method according to one embodiment of the present disclosure. An execution subject of the image acquisition method may be any image acquisition device having an image acquisition function, such as a mobile phone, a camera, a video camera, a smart watch, a computer, or a home appliance, and the like.

As illustrated in FIG. 1, the image acquisition method may comprise steps S110 to S140.

In step S110, a target object in a shooting image is determined according to a predetermined operation. In step S120, motion detection region tracking is performed on the target object in the shooting image to obtain a motion detection region containing the target object. In step S130: motion detection is performed within the motion detection region to obtain a motion detection result. In step S140, exposure adjustment is performed according to the motion detection result to obtain an adjusted exposure time, wherein the adjusted exposure time is used to acquire an image containing the target object.

The predetermined operation may be a preset operation for determining a target object in a trigger device. The shooting image may refer to a preview image displayed in real time on a display screen after an image acquisition setting is started. In one manner, the predetermined operation may refer to an operation in which a user opens a camera. In response to the predetermined operation, the image acquisition device may automatically detect objects present in the shooting image (which may refer to objects in the shooting image other than a background) and determine the detected objects as the target object. In another manner of the present disclosure, the predetermined operation may refer to an operation in which the user selects an object on the screen (for example, a box-selection operation or a tap-selection operation). In response to the predetermined operation, the image acquisition device may determine the object selected by the operation as the target object. The target object may be a person, an animal, a vehicle, a flower, or an object such as an arm, a head, and the like.

Furthermore, the image acquisition device may continuously and in real time perform motion detection region tracking on the target object in the shooting image to obtain the motion detection region containing the target object. An area of the motion detection region is generally smaller than a total area of the shooting image, and a maximum area of the motion detection region may be equal to the total area of the shooting image.

The image acquisition device performs motion detection within the motion detection region to obtain the motion detection result. The motion detection result may reflect whether motion of the target object exists within the motion detection region. The image acquisition device may perform motion detection within the motion detection region based on motion detection (MD) technology. Specifically, a motion-vector-based method or another existing motion detection method may be used, for example, an optical-flow-based algorithm may be used to detect motion within the motion detection region.

Exposure adjustment is performed according to the motion detection result to obtain the adjusted exposure time. An image containing the target object is acquired based on the adjusted exposure time, thereby effectively avoiding motion blur in the acquired image. Specifically, a predetermined strategy may be used to perform exposure adjustment according to the motion detection result. For example, when the motion detection result indicates that motion exists within the motion detection region, a current exposure time is reduced to obtain an adjusted exposure time that is smaller than the current exposure time.

In this manner, based on steps S110 to S140, the target object is first determined in the shooting image, and motion detection region tracking is performed on the target object to obtain the motion detection region containing the target object. Then, local motion detection is performed within the motion detection region, and exposure adjustment is further carried out. On one hand, power consumption is reduced; on the other hand, interference from objects other than the target object or from a background is avoided, thereby ensuring clarity of the target object. As a result, image acquisition power consumption can be effectively reduced while ensuring that the target object remains clear, improving clarity of the acquired image and enhancing battery life of the image acquisition device.

The following describes further optional specific embodiments under which the steps performed during image acquisition in the embodiment of FIG. 1 may be implemented.

In one embodiment, the performing motion detection region tracking on the target object in the shooting image to obtain the motion detection region containing the target object comprises:
performing automatic focus tracking on the target object in the shooting image to obtain an object focus-tracking region containing the target object; and obtaining the motion detection region containing the target object according to the object focus-tracking region.

The image acquisition device may perform automatic focus tracking on the target object in the shooting image based on automatic focus (AF) technology, to obtain the object focus-tracking region containing the target object. The object focus-tracking region may be a focus region. The automatic focus technology may be implemented by using an image-processing-based method or another existing focus-tracking method. For example, a feature-point-detection-based algorithm may be used to track the target object.

Furthermore, after obtaining the object focus-tracking region containing the target object, in one manner, the object focus-tracking region may be directly used as the motion detection region containing the target object. Alternatively, in another manner, the object focus-tracking region may be size-adjusted according to a predetermined adjustment strategy, and an adjusted object focus-tracking region is used as the motion detection region containing the target object.

In another embodiment, the performing motion detection region tracking on the target object in the shooting image to obtain the motion detection region containing the target object comprises: detecting a shooting scene; acquiring a preset shooting habit label of a current shooting user under the shooting scene; and using a preset motion region detection model, and performing detection processing based on the preset shooting habit label and a frame image corresponding to the shooting image, to obtain the motion detection region containing the target object.

The image acquisition device may detect a current shooting scene based on the displayed shooting image by using an image recognition algorithm. The shooting scene may include, for example, a seaside, a mountaintop, a street, and the like. For the current shooting user, corresponding preset shooting habit labels are respectively preset for different shooting scenes, and the preset shooting habit labels may be used to mark shooting behavior habit categories of the current shooting user.

The image acquisition device may determine the current shooting user by using methods such as manual user input, face recognition, fingerprint recognition, voice recognition, login account identification, and the like. Further, the preset shooting habit label of the current shooting user under the shooting scene may be queried from preset label record data.

Further, the preset shooting habit label and a frame image corresponding to the shooting image may be jointly input into a preset motion region detection model for detection processing. The preset motion region detection model may detect a motion detection region in the shooting image that contains the target object.

The preset motion region detection model is a pre-trained deep learning model used for motion detection region detection. A model architecture of the preset motion region detection model may be set according to actual requirements, and is not specifically limited in the present disclosure.

In this embodiment, by considering the shooting scene and shooting habits of the current shooting user, and using the preset motion region detection model to detect the motion detection region containing the target object, a more reasonable size of the motion detection region can be obtained. Using the motion detection region for motion detection can further improve reliability of motion detection, thereby ensuring reliability in reducing image acquisition power consumption.

Further, the preset shooting habit label may be generated in the following manner: collecting a plurality of sets of shooting behavior-related parameters of the current shooting user under the shooting scene; and performing analysis processing based on the plurality of sets of shooting behavior-related parameters to obtain the preset shooting habit label of the current shooting user under the shooting scene.

By using another device or the image acquisition device, a plurality of sets of shooting behavior-related parameters of the current shooting user during image acquisition in the shooting scene may be collected. Each set of shooting behavior-related parameters may include parameters of sensors in the image acquisition device, such as an optical sensor, a gyroscope, an accelerometer, and the like.

By performing analysis processing based on the collected plurality of sets of shooting behavior-related parameters, the preset shooting habit label of the current shooting user under the shooting scene can be obtained. The preset shooting habit label may be used to mark a shooting behavior habit category of the current shooting user when performing image acquisition under the shooting scene. It should be understood that the current shooting user may have different preset shooting habit labels under different shooting scenes.

Specifically, an operation of "performing analysis processing based on the plurality of sets of shooting behavior-related parameters to obtain the preset shooting habit label of the current shooting user under the shooting scene" includes: inputting the plurality of sets of shooting behavior-related parameters into a pre-trained shooting habit analysis model for analysis processing, and obtaining, from an output of the shooting habit analysis model, the preset shooting habit label of the current shooting user under the shooting scene.

The shooting habit analysis model is a pre-trained deep learning model used for shooting habit analysis. A model architecture of the shooting habit analysis model may be set according to actual requirements, and is not specifically limited in the present disclosure.

It should be noted that the step of analyzing the preset shooting habit label based on the collected plurality of sets of shooting behavior-related parameters may be performed in advance on another device, or may also be performed in advance on the image acquisition device when permitted. The preset shooting habit label obtained through prior analysis may be stored in the image acquisition device, and may be directly queried and obtained when the image acquisition device is in use.

Further, the preset motion region detection model may be trained in the following manner:
acquiring a sample set, wherein the sample set comprises a plurality of training samples, and each training sample comprises a sample shooting habit label and a plurality of frames of sample images, where each frame of the sample images is marked with a sample detection region containing a sample object; inputting the sample shooting habit labels and the plurality of frames of sample images comprised in the training samples into an initial motion region detection model for detection processing, to obtain predicted detection regions detected in the plurality of frames of sample images of the training samples; and performing parameter adjustment on the initial motion region detection model based on the predicted detection regions and the sample detection regions until a predetermined training termination condition is satisfied, to obtain the preset motion region detection model.

A sample set is collected in advance. The sample set comprises a plurality of training samples, and each training sample comprises a sample shooting habit label and a plurality of frames of sample images. The sample shooting habit label serves as a shooting habit label of the training sample, and the plurality of frames of sample images serve as sample image frames.

The sample shooting habit labels and the plurality of frames of sample images comprised in the training samples are input into the initial motion region detection model for detection processing, to obtain the predicted detection regions detected in the plurality of frames of sample images of the training samples.

A region detection error may be obtained based on the predicted detection regions and the sample detection regions. Parameter adjustment may be performed on the initial motion region detection model according to the region detection error until the predetermined training termination condition is satisfied (for example, a detection accuracy is higher than a predetermined threshold, or a learning process reaches a predetermined number of iterations). The initial motion region detection model is thereby trained to obtain the preset motion region detection model.

It should be noted that, in this embodiment, the steps of training the preset motion region detection model may be performed in advance on another device, or may also be performed in advance on the image acquisition device when permitted. The pre-trained preset motion region detection model may be loaded into the image acquisition device, and may be directly loaded and used when the image acquisition device is in use.

In one embodiment, the motion detection region is a complete region containing the target object; and the performing motion detection within the motion detection region to obtain the motion detection result comprises performing motion detection within the complete region to obtain the motion detection result. In this embodiment, the motion detection region is a complete region containing the target object, and motion detection is directly performed within the complete region to obtain the motion detection result.

Further, in another embodiment, the motion detection region comprises a plurality of sub-detection regions, and different sub-detection regions correspond to different portions of the target object; the performing motion detection within the motion detection region to obtain the motion detection result comprises: determining a region to be detected from the plurality of sub-detection regions according to areas of the sub-detection regions; and performing motion detection within the region to be detected to obtain the motion detection result.

The motion detection region comprises a plurality of sub-detection regions, and different sub-detection regions correspond to different portions of the target object, such as a hand, a face, a foot, and the like. When performing motion detection, first, a region to be detected is determined from the plurality of sub-detection regions according to areas of the sub-detection regions; then, motion detection is performed within the region to be detected to obtain the motion detection result. In this manner, an area of the motion detection region is ensured to be sufficiently small, thereby effectively reducing overall image acquisition power consumption.

Further, the determining a region to be detected from the plurality of sub-detection regions according to areas of the sub-detection regions may specifically comprise: screening, from the plurality of sub-detection regions, sub-detection regions that satisfy a predetermined detection condition, wherein the predetermined detection condition is that a sum of areas of the screened sub-detection regions is smaller than a predetermined threshold, and weights of the screened sub-detection regions are higher than weights of unscreened sub-detection regions; and obtaining the region to be detected according to the sub-detection regions satisfying the predetermined detection condition.

For example, the motion detection region comprises five sub-detection regions, and each sub-detection region corresponds to one portion of the target object. Different portions may be preset with corresponding weights. Accordingly, each sub-detection region corresponds to a respective weight and has a corresponding area.

From the five sub-detection regions, a plurality of sub-detection regions having larger weights may be screened in an order from high to low weight, such that the weights of the screened sub-detection regions are higher than the weights of the unscreened sub-detection regions, and it is ensured that a sum of areas of the screened sub-detection regions is smaller than the predetermined threshold.

The weights may be preset according to probabilities of motion of corresponding portions. For example, a portion having a higher probability of motion corresponds to a higher weight. In this manner, while effectively ensuring reliability of motion detection, it is also ensured that the area of the region to be detected is smaller than the predetermined threshold, thereby effectively reducing overall image acquisition power consumption.

In order to facilitate better implementation of the image acquisition method provided in the embodiments of the present disclosure, the embodiments of the present disclosure further provide an image acquisition apparatus based on the above-described image acquisition method. Meanings of terms used therein are the same as those in the above-described image acquisition method, and specific implementation details may be referred to the descriptions of the method embodiments. FIG. 2 illustrates a block diagram of an image acquisition apparatus according to one embodiment of the present disclosure.

As shown in FIG. 2, an image acquisition apparatus 200 includes an initialization module 210, a tracking module 220, a detection module 230, and an acquisition module 240. The initialization module 210 is configured to determine a target object in a shooting image according to a predetermined operation. The tracking module 220 is configured to perform motion detection region tracking on the target object in the shooting image to obtain a motion detection region containing the target object. The detection module 230 is configured to perform motion detection within the motion detection region to obtain a motion detection result. The acquisition module 240 is configured to perform exposure adjustment according to the motion detection result to obtain an adjusted exposure time, wherein the adjusted exposure time is used to acquire an image containing the target object.

In some embodiments of the present disclosure, the tracking module comprises a first tracking unit, configured to perform automatic focus tracking on the target object in the shooting image to obtain an object focus-tracking region containing the target object, and obtain the motion detection region containing the target object according to the object focus-tracking region.

In some embodiments of the present disclosure, the tracking module comprises a second tracking unit, configured to detect a shooting scene, acquire a preset shooting habit label of a current shooting user under the shooting scene, and use a preset motion region detection model, and perform detection processing based on the preset shooting habit label and a frame image corresponding to the shooting image, to obtain the motion detection region containing the target object.

In some embodiments of the present disclosure, the apparatus further comprises a label generation apparatus, configured to collect a plurality of sets of shooting behavior-related parameters of the current shooting user under the shooting scene, and perform analysis processing based on the plurality of sets of shooting behavior-related parameters to obtain the preset shooting habit label of the current shooting user under the shooting scene.

In some embodiments of the present disclosure, the motion detection region comprises a plurality of sub-detection regions, and different sub-detection regions correspond to different portions of the target object. The detection module is configured to determine a region to be detected from the plurality of sub-detection regions according to areas of the sub-detection regions, and perform motion detection within the region to be detected to obtain the motion detection result.

In some embodiments of the present disclosure, the detection module is further configured to screen, from the plurality of sub-detection regions, sub-detection regions that satisfy a predetermined detection condition, where the predetermined detection condition is that a sum of areas of the screened sub-detection regions is smaller than a predetermined threshold and weights of the screened sub-detection regions are higher than weights of unscreened sub-detection regions. The detection module is also configured to obtain the region to be detected according to the sub-detection regions satisfying the predetermined detection condition.

In some embodiments of the present disclosure, the apparatus further comprises a training module, configured to: acquire a sample set, where the sample set comprises a plurality of training samples, and each training sample comprises a sample shooting habit label and a plurality of frames of sample images, wherein each frame of the sample images is marked with a sample detection region containing a sample object; input the sample shooting habit labels and the plurality of frames of sample images comprised in the training samples into an initial motion region detection model for detection processing, to obtain predicted detection regions detected in the plurality of frames of sample images of the training samples; and perform parameter adjustment on the initial motion region detection model based on the predicted detection regions and the sample detection regions until a predetermined training termination condition is satisfied, to obtain the preset motion region detection model.

It should be noted that, although a plurality of modules or units for action execution are mentioned in the above detailed description, such division is not mandatory. In practice, according to the embodiments of the present disclosure, features and functions of two or more modules or units described above may be implemented in one module or unit. Conversely, features and functions of one module or unit described above may be further divided and implemented by a plurality of modules or units.

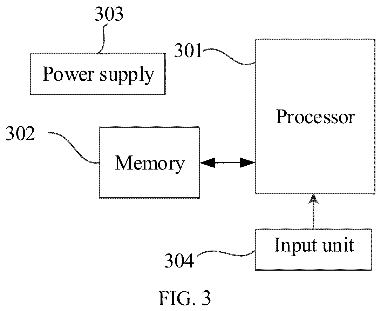

In addition, the embodiments of the present disclosure further provide an electronic device. As shown in FIG. 3, FIG. 3 illustrates a schematic structural diagram of the electronic device involved in the embodiments of the present disclosure. Specifically, the electronic device may comprise components such as a processor 301 having one or more processing cores, a memory 302 comprising one or more computer-readable storage media, a power supply 303, and an input unit 304, among others. Those skilled in the art may understand that the electronic device structure shown in FIG. 3 does not constitute a limitation on the electronic device, and may include more or fewer components than those illustrated, or combine certain components, or adopt different component arrangements. The components are described as follows.

The processor 301 is a control center of the electronic device, and connects various parts of the computer device through various interfaces and lines. By running or executing software programs and/or modules stored in the memory 302, and by invoking data stored in the memory 302, the processor 301 executes various functions of the computer device and processes data, thereby performing overall monitoring of the electronic device. Optionally, the processor 301 may comprise one or more processing cores. Preferably, the processor 301 may integrate an application processor and a modem processor, wherein the application processor mainly processes an operating system, a user interface, and application programs, and the modem processor mainly processes wireless communication. It should be understood that the modem processor may also not be integrated into the processor 301.

The memory 302 may be used to store software programs and modules. The processor 301 executes various functional applications and data processing by running the software programs and modules stored in the memory 302. The memory 302 may mainly comprise a program storage area and a data storage area, wherein the program storage area may store an operating system and application programs required for at least one function (such as an audio playback function, an image playback function, and the like), and the data storage area may store data created according to use of the computer device. In addition, the memory 302 may include a high-speed random access memory, and may also include a non-volatile memory, such as at least one magnetic disk storage device, flash memory device, or other non-volatile solid-state storage device. Correspondingly, the memory 302 may further include a memory controller to provide access of the processor 301 to the memory 302.

The electronic device further includes a power supply 303 configured to supply power to the various components. Preferably, the power supply 303 may be logically connected to the processor 301 through a power management system, so as to implement functions such as charging management, discharging management, and power consumption management through the power management system. The power supply 303 may further include one or more direct current or alternating current power sources, a recharging system, a power failure detection circuit, a power converter or inverter, a power status indicator, and any other components.

The electronic device may further include an input unit 304. The input unit 304 may be used to receive input numeric or character information, and to generate signal inputs related to user settings and function control, such as signals from a keyboard, a mouse, a joystick, an optical input device, or a trackball, and the like.

Although not shown, the electronic device may further include components such as a display unit, which will not be described in detail herein. Specifically, in this embodiment, the processor 301 in the electronic device loads executable files corresponding to processes of one or more computer programs into the memory 302 according to instructions, and runs the computer programs stored in the memory 302 by the processor 301, thereby implementing the various functions described in the foregoing embodiments of the present disclosure. For example, the processor 301 may execute the following steps: determining a target object in a shooting image according to a predetermined operation; performing motion detection region tracking on the target object in the shooting image to obtain a motion detection region containing the target object; performing motion detection within the motion detection region to obtain a motion detection result; and performing exposure adjustment according to the motion detection result to obtain an adjusted exposure time, wherein the adjusted exposure time is used to acquire an image containing the target object.

In some embodiments of the present disclosure, the performing motion detection region tracking on the target object in the shooting image to obtain the motion detection region containing the target object comprises: performing automatic focus tracking on the target object in the shooting image to obtain an object focus-tracking region containing the target object; and obtaining the motion detection region containing the target object according to the object focus-tracking region.

In some embodiments of the present disclosure, the performing motion detection region tracking on the target object in the shooting image to obtain the motion detection region containing the target object comprises: detecting a shooting scene; acquiring a preset shooting habit label of a current shooting user under the shooting scene; and using a preset motion region detection model, and performing detection processing based on the preset shooting habit label and a frame image corresponding to the shooting image, to obtain the motion detection region containing the target object.

In some embodiments of the present disclosure, the method further comprises: collecting a plurality of sets of shooting behavior-related parameters of the current shooting user under the shooting scene; and performing analysis processing based on the plurality of sets of shooting behavior-related parameters to obtain the preset shooting habit label of the current shooting user under the shooting scene.

In some embodiments of the present disclosure, the motion detection region comprises a plurality of sub-detection regions, and different sub-detection regions correspond to different portions of the target object; the performing motion detection within the motion detection region to obtain the motion detection result comprises: determining a region to be detected from the plurality of sub-detection regions according to areas of the sub-detection regions; and performing motion detection within the region to be detected to obtain the motion detection result.

In some embodiments of the present disclosure, the determining the region to be detected from the plurality of sub-detection regions according to the areas of the sub-detection regions comprises: screening, from the plurality of sub-detection regions, sub-detection regions that satisfy a predetermined detection condition, where the predetermined detection condition is that a sum of areas of the screened sub-detection regions is smaller than a predetermined threshold and weights of the screened sub-detection regions are higher than weights of unscreened sub-detection regions; and obtaining the region to be detected according to the sub-detection regions satisfying the predetermined detection condition.

In some embodiments of the present disclosure, the method further comprises: acquiring a sample set, where the sample set comprises a plurality of training samples, and each training sample comprises a sample shooting habit label and a plurality of frames of sample images, wherein each frame of the sample images is marked with a sample detection region containing a sample object; inputting the sample shooting habit labels and the plurality of frames of sample images comprised in the training samples into an initial motion region detection model for detection processing, to obtain predicted detection regions detected in the plurality of frames of sample images of the training samples; and performing parameter adjustment on the initial motion region detection model based on the predicted detection regions and the sample detection regions until a predetermined training termination condition is satisfied, to obtain the preset motion region detection model.

Those of ordinary skill in the art can understand that all or part of the steps of the various methods in the foregoing embodiments may be implemented by computer programs, or implemented by controlling related hardware through computer programs. The computer programs may be stored in a computer-readable storage medium and loaded and executed by a processor.

Accordingly, the embodiments of the present disclosure further provide a storage medium storing computer program. The computer program is loaded and executed by a processor to perform the steps of any one of the methods provided in the embodiments of the present disclosure.

The storage medium may comprise, for example, a read-only memory (ROM), a random access memory (RAM), a magnetic disk, an optical disk, or the like.

Since the computer program stored in the storage medium can execute the steps of any one of the methods provided in the embodiments of the present disclosure, the beneficial effects achievable by the methods provided in the embodiments of the present disclosure can be realized. Reference may be made to the foregoing embodiments for details, which will not be repeated herein.

Those skilled in the art, after considering the specification and practicing the implementations disclosed herein, can readily conceive of other embodiments of the present disclosure. The present disclosure is intended to cover any variations, uses, or adaptive changes of the present disclosure, which follow the general principles of the present disclosure and include common general knowledge or conventional technical means in the art that are not explicitly disclosed herein.

It should be understood that the present disclosure is not limited to the embodiments described above and illustrated in the accompanying drawings, and that various modifications and changes may be made without departing from the scope of the present disclosure.

## Claims

1. A method of acquiring an image, comprising:
determining a target object in a shooting image according to a predetermined operation;
performing motion detection region tracking on the target object in the shooting image to obtain a motion detection region containing the target object;
performing motion detection within the motion detection region to obtain a motion detection result; and
performing exposure adjustment according to the motion detection result to obtain an adjusted exposure time, wherein the adjusted exposure time is used to acquire an image containing the target object.

2. The method according to claim 1, wherein the performing motion detection region tracking on the target object in the shooting image to obtain the motion detection region containing the target object comprises:
performing automatic focus tracking on the target object in the shooting image to obtain an object focus-tracking region containing the target object; and
obtaining the motion detection region containing the target object according to the object focus-tracking region.

3. The method according to claim 1, wherein the performing motion detection region tracking on the target object in the shooting image to obtain the motion detection region containing the target object comprises:
detecting a shooting scene;
acquiring a preset shooting habit label of a current shooting user under the shooting scene; and
using a preset motion region detection model, and performing detection processing based on the preset shooting habit label and a frame image corresponding to the shooting image, to obtain the motion detection region containing the target object.

4. The method according to claim 3, wherein the preset shooting habit label is generated in the following manner:
collecting a plurality of sets of shooting behavior-related parameters of the current shooting user under the shooting scene; and
performing analysis processing based on the plurality of sets of shooting behavior-related parameters to obtain the preset shooting habit label of the current shooting user under the shooting scene.

5. The method according to claim 1, wherein the motion detection region comprises a plurality of sub-detection regions, and different sub-detection regions correspond to different portions of the target object, and the performing motion detection within the motion detection region to obtain the motion detection result comprises:
determining a region to be detected from the plurality of sub-detection regions according to areas of the sub-detection regions; and
performing motion detection within the region to be detected to obtain the motion detection result.

6. The method according to claim 5, wherein the determining the region to be detected from the plurality of sub-detection regions according to the areas of the sub-detection regions comprises:
screening, from the plurality of sub-detection regions, sub-detection regions that satisfy a predetermined detection condition, wherein the predetermined detection condition is that a sum of areas of the screened sub-detection regions is smaller than a predetermined threshold and weights of the screened sub-detection regions are higher than weights of unscreened sub-detection regions; and
obtaining the region to be detected according to the sub-detection regions satisfying the predetermined detection condition.

7. The method according to claim 3, wherein the preset motion region detection model is trained in the following manner:
acquiring a sample set, wherein the sample set comprises a plurality of training samples, and each training sample comprises a sample shooting habit label and a plurality of frames of sample images, wherein each frame of the sample images is marked with a sample detection region containing a sample object;
inputting the sample shooting habit labels and the plurality of frames of sample images comprised in the training samples into an initial motion region detection model for detection processing to obtain predicted detection regions detected in the plurality of frames of sample images of the training samples; and
performing parameter adjustment on the initial motion region detection model based on the predicted detection regions and the sample detection regions until a predetermined training termination condition is satisfied, to obtain the preset motion region detection model.

8. The method according to claim 4, wherein the performing analysis processing based on the plurality of sets of shooting behavior-related parameters to obtain the preset shooting habit label of the current shooting user under the shooting scene comprises:
inputting the plurality of sets of shooting behavior-related parameters into a pre-trained shooting habit analysis model for analysis processing to obtain the preset shooting habit label of the current shooting user under the shooting scene output by the shooting habit analysis model, wherein the shooting habit analysis model is a pre-trained deep learning model for shooting habit analysis.

9. The method according to claim 2, wherein the obtaining the motion detection region containing the target object according to the object focus-tracking region comprises:
using the object focus-tracking region as the motion detection region containing the target object.

10. The method according to claim 2, wherein the obtaining the motion detection region containing the target object according to the object focus-tracking region comprises:
performing size adjustment on the object focus-tracking region according to a predetermined adjustment strategy, and using an adjusted object focus-tracking region as the motion detection region containing the target object.

11. The method according to claim 1, wherein the predetermined operation refers to an operation of a user turning on a camera.

12. The method according to claim 1, wherein the predetermined operation refers to an operation of a user selecting an object on a screen.

13. The method according to claim 1, wherein a sub-detection region corresponding to a portion having a higher probability of motion has a higher weight.

14. An image acquisition apparatus, comprising:
an initialization module, configured to determine a target object in a shooting image according to a predetermined operation;
a tracking module, configured to perform motion detection region tracking on the target object in the shooting image to obtain a motion detection region containing the target object;
a detection module, configured to perform motion detection within the motion detection region to obtain a motion detection result; and
an acquisition module, configured to perform exposure adjustment according to the motion detection result to obtain an adjusted exposure time, wherein the adjusted exposure time is used to acquire an image containing the target object.

15. The apparatus according to claim 14, wherein the tracking module comprises a first tracking unit, configured to:
perform automatic focus tracking on the target object in the shooting image to obtain an object focus-tracking region containing the target object; and
obtain the motion detection region containing the target object according to the object focus-tracking region.

16. The apparatus according to claim 14, wherein the tracking module comprises a second tracking unit, configured to:
detect a shooting scene;
acquire a preset shooting habit label of a current shooting user under the shooting scene; and
use a preset motion region detection model, and perform detection processing based on the preset shooting habit label and a frame image corresponding to the shooting image, to obtain the motion detection region containing the target object.

17. The apparatus according to claim 16, wherein the apparatus further comprises a label generation apparatus, configured to:
collect a plurality of sets of shooting behavior-related parameters of the current shooting user under the shooting scene; and
perform analysis processing based on the plurality of sets of shooting behavior-related parameters to obtain the preset shooting habit label of the current shooting user under the shooting scene.

18. The apparatus according to claim 14, wherein the motion detection region comprises a plurality of sub-detection regions, and different sub-detection regions correspond to different portions of the target object, and the detection module is configured to:
determine a region to be detected from the plurality of sub-detection regions according to areas of the sub-detection regions; and
perform motion detection within the region to be detected to obtain the motion detection result.

19. A storage medium storing computer program executable by a processor to implement the method as claimed in any one of claims 1-13.

20. An electronic device, comprising a memory, a processor, and instructions stored in the memory and executable by the processor to implement the method as claimed in any one of claims 1-13.
